# EUROPEAN PATENT APPLICATION

(11) **EP 3 279 981 A1**
(43) Date of publication of application: **07.02.2018**
(21) Application number: 16182949.4
(22) Date of filing: 05.08.2016
(51) Int. Cl.: H01M 4/66, H01M 10/0587, H01M 10/0525

(54) **ELECTRODE AND BATTERY CELL COMPRISING THE SAME**

(71) Applicant: Lithium Energy and Power GmbH & Co. KG, 70469 Stuttgart (DE)
(72) Inventor: Deromelaere, Gaetan, 70806 Kornwestheim (DE); Wurm, Calin Iulius, 86405 Meitingen (DE)
(74) Representative: Bee, Joachim

(57) **Abstract**

The present invention relates to an electrode (14) for a battery cell (10), comprising a sheet-like current collector (20) and a layer of active material (22) connected to the sheet-like current collector (20). It is provided that the sheet-like current collector (20) or at least a part of said sheet-like current collector (20) is made from anisotropic material for generating an anisotropic thermal behaviour of the sheet-like current collector (20) with a thermal conductivity that is several times higher in the in-plane direction than in the out-of-plane direction.

The present invention further relates to a battery cell (10) with such an electrode (14).

## Description

The present invention relates to an electrode for a battery cell which electrode shows an improved thermal behavior. The present invention further relates to a battery cell comprising such an electrode and to an electrochemical energy storing device, in particular a battery, such as a lithium ion battery, comprising such a battery cell.

### State of the art

Electrochemical energy storing devices, such as lithium ion batteries, are known and used in wide application areas. Li-ion batteries are vital energy storage devices due to their high specific energy density. They are predominantly used in consumer electronics; however, improvements in safety are required for full acceptance of Li-ion cells in transportation applications, such as electric vehicles.

During the charge of lithium ions cells, the lithium ions are migrating from cathode by dint of electrolyte across the separator to the anode simultaneously with an electrons flow in the same direction on the external circuit. During discharge the processes are taking place in the other direction.

If the battery cell is brought outside the normal cycling or storage conditions (e.g. high or low temperature, internal or external short circuits, overcharge, deep discharge, etc.) the inner temperature can excessively rise. If the temperature in the cell is sufficiently high, it could lead to decomposition of electrolyte in the battery or separator shrinkage, which in turn leads to safety hazards, gas valve burst, up to explosion in the battery. Once started this chain reaction cannot be stopped anymore. Thus an early detection system linked with a method that can stop either the ion flow or the electric current is used to prevent the destruction of the cell. The existent solutions (e.g. shutdown trilayer separators or fuse) might react too late (in the case of separator) and the destruction cannot be stopped anymore (particularly for large cells) or lead to an unsafe cell in an indeterminate state (in the case of fuses).

US 2014/0127574 A1 describes a battery cell of a secondary Li-ion battery. The cell has two electrodes, an anode and a cathode, each electrode comprising a sheet-like current collector, namely a Cu- or Al-foil, and a layer of electro-active material connected to the sheet-like current collector. Several examples of cathodic and anodic electro-active materials are listed in the document.

### Disclosure of the invention

The present invention relates to an electrode for a battery cell, comprising a sheet-like current collector and a layer of active material connected (over a large area) to the sheet-like current collector. The sheet-like current collector or at least a part of said sheet-like current collector is made from anisotropic material for generating an anisotropic thermal behaviour of the sheet-like current collector with a thermal conductivity that is several times higher in the in-plane direction than in the out-of-plane direction. The anisotropic thermal behaviour of the sheet-like current collector is mainly given by the inner structure of the anisotropic material and not the outer shape of the current collector. In this case, the electrical conductivity as well as the thermal conductivity is high in the in-plane direction but small in the out-of-plane direction. Preferably, the thermal conductivity in the in-plane direction is at least five times (≥ 5x) higher than the thermal conductivity in the out-of-plane direction. More preferably, the thermal conductivity in the in-plane direction is at least ten times (≥ 10x) higher than the thermal conductivity in the out-of-plane direction. The cell preferably is a secondary battery cell, especially a cell for a Li-ion battery.

Such an electrode allows an improved thermal behavior of a battery in particular when being in use under extreme working conditions and especially in abuse cases.

Due to a better spreading of the heat, especially in the in-plane direction, the temperature increase is staying below the critical onset temperature needed to start the side-reaction of the anode and/or especially of the cathode. This limits the risk of the thermal runaway due to a local temperature increase from the short-circuit position.

Using the anisotropic material with different material properties in the in-plane and the out-of-plane direction increases the lateral heat transfer capability inside the cell. Due to the small thickness, the effect decreasing the heat propagation from layers to layers (above and under the short-circuit position) is quite limited.

The sheet-like current collector made from anisotropic material especially replaces the standard (isotropic) aluminium-foil for the cathode material known from the electrodes of known battery cells.

According to an embodiment of the invention, the anisotropic material is graphite based or a graphite-containing material. Preferably, the anisotropic material is expanded graphite containing material. Further materials could also be available for this purpose, as for example graphene-based material. Both materials can be used to replace the aluminium-foil for the cathode material. A replacement of the copper-foil with these materials is not possible due to intercalation capability of the expanded graphite. The replacement of the copper-foil can only be made by a non-graphite based anisotropic material. A possible material could be for example a multi-layer sheet made of copper and nickel or copper and carbon (expanded graphite or graphene), which allows an anisotropic behavior.

According to another embodiment of the invention, the anisotropic material is expanded graphite or graphene based material.

According to yet another embodiment of the invention, the anisotropic material is a layered material, wherein the layers of said layered material are metal based and/or graphite based.

According to a further embodiment of the invention, the anisotropic material comprises at least one non-metallic material. Preferably, the anisotropic material is a non-metallic material.

According to a further embodiment, the electrode is a positive electrode, wherein the active material is suitable for forming a cathode of the battery cell.

According to a further embodiment, the electrode is a negative electrode, wherein the active material is suitable for forming an anode of the battery cell.

The present invention further relates to a battery cell, comprising at least one electrode, wherein this electrode or at least one of these electrodes is an electrode like described in detail before. According to an embodiment of the invention, one or more sheet-like separator(s) is/are separating the electrodes.

According to another embodiment of the invention, a layered structure of the cell comprises the electrode or the electrodes. The layered structure of the cell preferably further comprises the sheet-like separator.

Such a battery cell may thus comprise a layer structure which may be as follows: first current collector - first active material layer - separator - second active material layer - second current collector, wherein connected to the respective current collector and embedded in the respective layer of active material is provided a plurality of spacer elements. The separator and the first and second layers of active material may be formed as it is generally known in the art for example for forming a lithium ion battery cell. With this regard, the first active material layer may be formed for acting as a cathode, whereas the second active material layer may be formed for acting as an anode.

The first current collector and/or the second current collector may be formed as it is described in detail above.

The battery cell may be formed as a so-called jelly roll or wounded type cell, respectively, or it may have a stacked arrangement, for example.

Such a battery cell may thus provide an improved security behavior and may thus prevent or at least significantly reduce the danger of a thermal runaway for example in case an object is inserted into the cell structure or in case of an internal short circuit.

With regard to further technical features and advantages of the battery cell as described above, it is referred to the description of the electrode, the electrochemical energy storage device, the figures and the description of the figures.

The present invention further relates to an electrochemical energy storage device, comprising at least one of a battery cell like it is described in detail above.

Such an electrochemical energy storage device may for example be a battery or a battery module, which comprises, in particular as main unit, a battery cell like described above.

With regard to further technical features and advantages of the electrochemical energy storage device as described above, it is referred to the description of the electrode, the battery cell, the figures and the description of the figures.

### Figures

Further advantages and embodiments of the subject-matters as described herein are described in the figures and the following description of the figures, wherein the features described may be part of the invention alone or in any combination, insofar it is not excluded due to the description or the context. It has to be noted that the figures are of illustrative purpose, only, and are not meant to restrict the present subject-matters.
- Fig. 1: shows a schematic view of a battery cell according to an embodiment of the invention; and
- Fig. 2: shows a schematic view of the advantage of the cell according to Fig. 1.

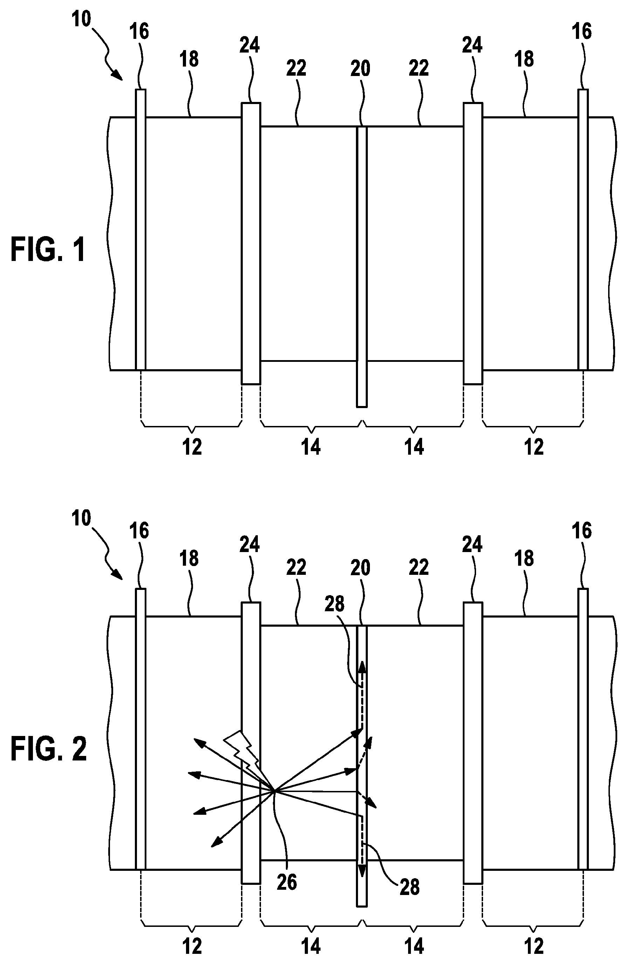

According to figure 1, a schematic structure of a battery cell 10 according to an embodiment is shown. The battery cell 10 comprises a first electrode 12 being a negative electrode of the cell 10, a second electrode 14 being a positive electrode of the cell 10. The first electrode 12 comprises a sheet-like current collector 16 which is provided with a layer 18 of active anode material connected to said sheet-like current collector 16 and the second electrode 14 comprises a sheet-like current collector 20 and a layer 22 of cathode active material which is provided with said sheet-like current collector 20. The two layers 18, 22 of active material are separated by a separator 24. Each previously mentioned component of the electrodes 12, 14 is formed like a layer/sheet. Therefore, the battery cell 10 comprises a layered structure formed by the components 16, 18 of the first electrode 12, the components 20, 22 of the second electrode 14 as well as the separator 24.

The battery cell 10 is preferably formed as a so-called jelly roll or wounded type cell, respectively, like it is generally known in the art for lithium ion batteries, for example.

The sheet-like current collector 20 is made from anisotropic material for generating an anisotropic thermal behaviour of said current collector 20 with a thermal conductivity that is several times higher in the in-plane direction than in the out-of-plane direction. The anisotropic material replaces the standard (isotropic) aluminium-foil for the cathode electrode known from the second electrodes 14 of known battery cells 10.

The anisotropic thermal behaviour of the sheet-like current collector 20 is mainly given by the inner structure of the anisotropic material and not the outer shape of this current collector 20. In this case, the electrical conductivity as well as the thermal conductivity is high in the in-plane direction but small in the out-of-plane direction.

The anisotropic material is graphite based or a graphite-containing material. To be more precise, the anisotropic material is the expanded graphite containing/graphite based material or the anisotropic material is a graphene-based material. The thermal conductivity in the in-plane direction is about 40 times (40x) higher than the thermal conductivity in the out-of-plane direction.

Fig. 2 shows an internal short circuit (symbolized by a flash-symbol) causing an excessive temperature rise of the inner temperature at one area of the battery cell 10. By means of heat conduction/heat transfer (arrows 26) the surrounding will heat up.

**Table 1 shows results with a comparable standard aluminium (Al-)foil used as current collector 20:**

| *Layer* | *Cu* | *anode* | *sep* | *cathode* | *Al* | *Jelly-roll* |
|---|---|---|---|---|---|---|
| in plane heat conduction [W/m.K] | 400 | 7.3 | 0.3 | 3.9 | 238 | 26.9 |
| out of plane Heat conduction [W/m.K] | 400 | 7.3 | 0.3 | 3.9 | 238 | 2.2 |
| Density [kg/m^3] | 8700 | 1761 | 1113 | 3181 | 2700 | 2428 |
| Specific heat capacity [J/kg.K] | 385 | 958 | 1578 | 904 | 900 | 905 |
| thickness [m] | 4.0E-06 | 7.8E-05 | 1.5E-05 | 5.9E-05 | 8.5E-06 | 1.65E-04 |

In this standard case, the heat transfer into the whole cell 10 in all the direction at the same time, as all materials have isotropic material, especially the aluminium foil. The heat transfer stays very local and reaches the cathode and anode layers 16, 18, 20, 22, 24 above and under the short circuit position. This increases the risk of the thermal runaway due to the local temperature increase and a lack of heat transfer to other parts of the cell, which still have a low temperature.

**Table 2 shows results with a graphite based anisotropic material as current collector 20:**

| *Layer* | *Cu* | *anode* | *sep* | *cathode* | *curr. coll.* | *Jelly-roll* |
|---|---|---|---|---|---|---|
| in plane heat conduction [W/m.K] | 400 | 7.3 | 0.3 | 3.9 | 400 | 35.3 |
| out of plane Heat conduction [W/m.K] | 400 | 7.3 | 0.3 | 3.9 | 10 | 2.1 |
| Density [kg/m^3] | 8700 | 1761 | 1113 | 3181 | 2700 | 2428 |
| Specific heat capacity [J/kg.K] | 385 | 958 | 1578 | 904 | 900 | 905 |
| thickness [m] | 4.0E-06 | 7.8E-05 | 1.5E-05 | 5.9E-05 | 8.5E-06 | 1.65E-04 |

In the new construction, the heat transfer across the layer is slightly decreasing, as the thermal conductivity in this direction is quite small (around 10 W/m. K - table 2). The heat transfer along the current collector 20 (= cathode carrier) is increasing, as the thermal conductivity in the in-plane direction (arrows 28) is very high (around 400 W/m. K - table 2), i.e. higher than the one of the aluminium foil itself from the standard construction (around 200 W/m.K -table 1). The heat spreading is more effective in the in-plane direction and decreases the chance of a thermal runaway, as the heat is no more concentrating at the anode material around the short circuit position (starting point of arrows 26), which is the trigger for the reaction of the cathode (= second electrode 14).

## Claims

1. Electrode (14) for a battery cell (10), comprising a sheet-like current collector (20) and a layer (22) of active material connected to the sheet-like current collector (20), **characterized in that** the sheet-like current collector (20) or at least a part of said sheet-like current collector (20) is made from anisotropic material for generating an anisotropic thermal behavior of the sheet-like current collector (20) with a thermal conductivity that is several times higher in the in-plane direction than in the out-of-plane direction.

2. Electrode according to claim 1, **characterized in that** the anisotropic material is a graphite based material or a graphite-containing material.

3. Electrode according to claim 2, **characterized in that** the anisotropic material is expanded graphite or graphene based material.

4. Electrode according to any of the preceding claims, **characterized in that** the anisotropic material is a layered material, wherein the layers of said layered material are metal based and/or graphite based.

5. Electrode according to any of the preceding claims, **characterized in that** the anisotropic material is a non-metallic material.

6. Electrode according to any of the preceding claims, **characterized in that** the electrode (14) is a positive electrode, wherein the active material is suitable for forming a cathode of the battery cell (10).

7. Electrode according to any of the preceding claims, **characterized in that** the electrode (14) is a negative electrode, wherein the active material is suitable for forming an anode of the battery cell (10).

8. Battery cell, comprising one or more electrodes (12, 14), wherein the electrode or at least one of the electrodes (12, 14) is an electrode (14) according to any of claims 1 to 7.

9. Battery cell according to claim 8, **characterized by** one or more sheet-like separators (24) separating the electrodes (12, 14).

10. Battery cell according to claim 8 or 9, **characterized by** a layered structure comprising the electrodes(12, 14) and separators (24).

11. Battery cell according to any of claims 8 to 10, **characterized in that** the layered structure is formed as a jelly roll structure.

12. Electrochemical energy storage device, especially Li-ion battery, comprising at least one battery cell (10) according to any of claim 8 to 11.
